# EUROPÄISCHE PATENTANMELDUNG

(11) **EP 1 275 765 A1**
(43) Veröffentlichungstag der Anmeldung: **15.01.2003**
(21) Anmeldenummer: 01117066.9
(22) Anmeldetag: 13.07.2001
(51) Int. Cl.: D06F 37/20

(54) **Elektronisches Auswuchten für Waschmaschinen, Wäschetrockner, Wäschetrockner u.a**

(71) Anmelder: Diethelm, Otto, 31177 Adlum (DE); Diethelm, Ira, 38106 Braunschwaig (DE)
(72) Erfinder: Diethelm, Otto, 31177 Adlum (DE); Diethelm, Ira, 38106 Braunschwaig (DE)

(57) **Zusammenfassung**

Die Erfindung betrifft eine Waschmaschine, Waschtrockner oder einen Wäschetrockner o.ä. zum Waschen, Schleudern und Trocknen von Waschgut mit einer Trommel (2), welche um eine Achse drehbar ist. Durch eine Anordnung von elektromagnetischen Spulen im Gehäuse (1) erfolgt ein elektronisches Auswutchen dadurch, dass die Spulen (3a-3n) eine elektromagnetische Kraft entgegen der Unwucht (ca. 180° versetzt) erzeugen. Außerdem kann eine Transportsicherung entfallen.

## Beschreibung

Die Erfindung betrifft eine Waschmaschine, Waschtrockner oder einen Wäschetrockner o.ä. (im Folgenden werden diese Maschinen als W-Maschine abgekürzt) zum Waschen, Schleudern und Trocknen von Waschgut mit einer Trommel (2), welche um eine Achse drehbar ist. Daneben betrifft die Erfindung ein Verfahren zum Waschen, Schleudern und Trocknen von Waschgut in einer W-Maschine mit einem Gehäuse (1), das zum Teil aus Kunststoff oder einem nicht magnetischem Stoff hergestellt ist und ohne Dämpfungen direkt an dem Außengehäuse der W-Maschine starr (6a-6b) oder über Schwingmetalle befestigt werden kann.

Bei heutigen W-Maschinen erfolgt eine mechanische Schwingungsdämpfung durch flexible Aufhängungen mit Dämpfern oder Gelkissen.

Die Lagerung der Trommel (2) erfolgt über Kugel- oder Gleitlager (ähnlich zu 4 u. 5). Der Antrieb der Trommel (2) erfolgt über Keilriemen (7), Flachriemen o.ä. von einem polumschaltbaren Wechselstrommotor oder ähnliche Antriebe, wie z.Z. allgemeiner Standard oder nach Zeichnung 2 mit in der Trommel (2) eingebautem Rotor (12) und im Gehäuse (1) eingebauter Ständerwicklung (11a-11n) als polumschaltbarer Wechselstrommotor.

Das Gehäuse (1) ist dadurch gekennzeichnet, dass im vorderen Teil Spulen (3a u. 3n) mit Weicheisenkernen angeordnet sind, die elektromagnetisch über den Luftspalt (9) auf die Trommel (2) entgegen der Unwucht durch das Waschgut einwirken. Ihre Anzahl sei n.

Durch die Meßanordnung (4), wie aus handelsüblichen Auswuchtmaschinen bekannt, werden Synchron mit der Drehzahl/Drehgeschwindigkeit der Trommel (2) je nach Unwucht die n Spulen angesteuert, so dass die mechanische Kraft (Fliehkraft) über die elektromagnetische Kraft ca. 180° versetzt aufgeschaltet wird, so dass eine Kompensation der mechanischen und elektromagnetischen Kräfte entsteht und damit auch die Unwucht kompensiert wird.

Die Spulen (3a-3n) mit Weicheisenkernen sind dadurch gekennzeichnet, dass sie vorn in dem Gehäuse (1) angeordnet sind und durch den Einbau einen sehr kleinen Luftspalt (9) zur Trommel (2) haben. Die Spulen (3a-3n) werden über eine Ringleitung synchron zur Drehzahl gesteuert. Die Ansteuerung der Spulen kann über eine Logik, die den Signalgeber (4) abfragt, erfolgen. Die Größe der Spulen (3a-3n) sowie die Anzahl n richtet sich nach der Größe der W-Maschine und der maximalen Drehzahl der Trommel (2).

Dadurch können W-Maschinen konstruiert werden, die vibrationsfrei und dadurch geräuscharm sind. Durch die mögliche Leichtbauweise bzw. Kompaktbauweise entfällt auch eine Transportsicherung.

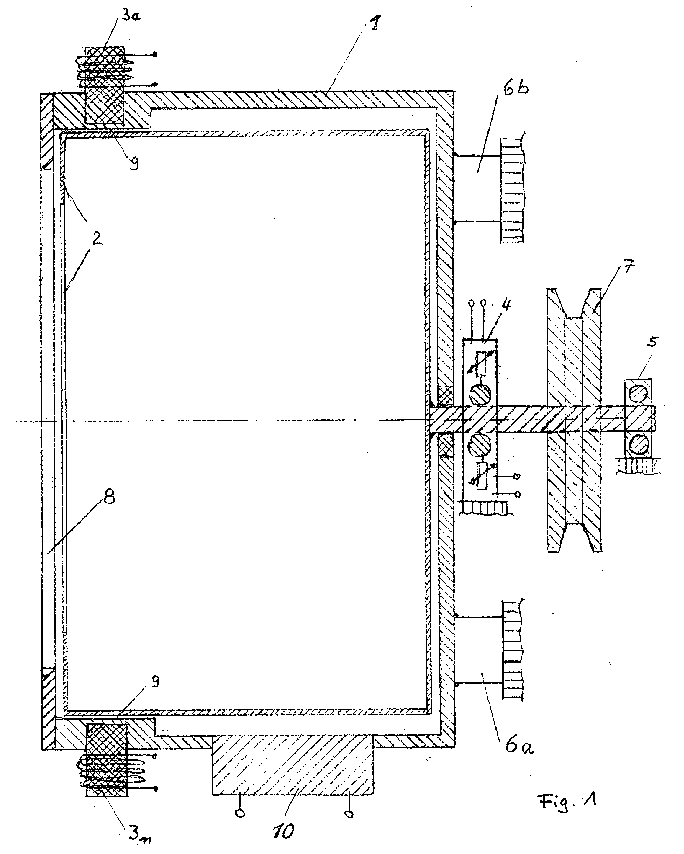

Fig. 1 zeigt einen Querschnitt einer W-Maschine mit einem Gehäuse (1) teilweise aus Kunststoff oder einem nichtmagnetischem Stoff. In dem Gehäuse (1) sind elektromagnetische Spulen (3a-3n) mit Weicheisenkernen angeordnet. Das Gehäuse (1) ist starr oder über Schwingmetalle (6a u. 6b) am Außengehäuse der W-Maschine befestigt. Über die Öffnung (8) kann die W-Maschine mit Waschgut beladen werden. Auch eine Variation als Toplader ist möglich.

Die Trommel (2) ist über Kugel- oder Gleitlager (5) und einer Messeinrichtung (4), wie in handelsüblichen Auswuchtmaschinen üblich, gelagert. Zumindest der vordere Teil der Trommel ist aus einem weichmagnetischen Stoff hergestellt und läuft während der Drehung der Trommel (2) über einen kleinen Luftspalt (9) an den Spulen (3a-3n) vorbei.

Über die Keilriemenscheibe (7), Flachriemenscheibe o.ä. von einem polumschaltbaren Wechselstrommotor erfolgt der Antrieb.

Über die Heizplatte (10) wird das Waschwasser entsprechend beheizt.

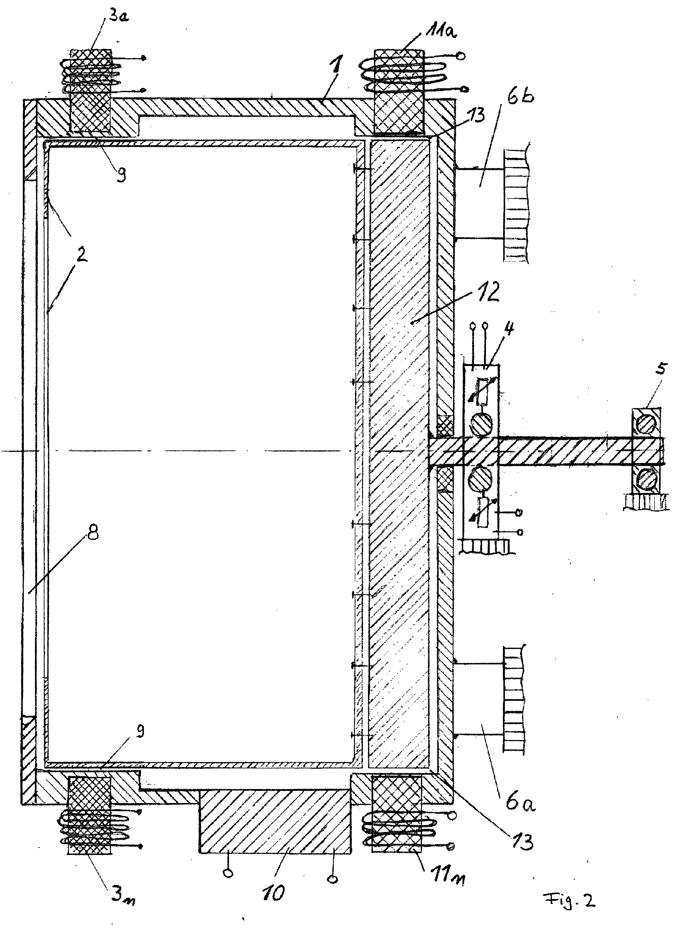

Fig. 2 unterscheidet sich nur in der Antriebsart von Fig. 2: Bei diesem sog. Direktantrieb ist die Trommel (2) mit dem Rotor (12) mechanisch verbunden. Über die Ständerwicklung (11a-11n) und Luftspalt (13) erfolgt der Antrieb der Trommel (2).

## Patentansprüche

1. Waschmaschine, Waschtrockner oder Wäschetrockner zum Waschen und Schleudern von Waschgut mit einer Trommel (2), welche durch einen Antrieb (7) oder mit Direktantrieb mit Rotor (12) und Ständerwicklung (11a-11n) um eine Achse drehbar ist, **gekennzeichnet durch** eine Auswuchteinrichtung, die an einem Gehäuse (1) aus Kunststoff oder einem nichtmagnetischem Stoff angeordnet ist.

2. W-Maschinen nach Anspruch 1 **dadurch gekennzeichnet, dass** im Gehäuse (1) elektromagnetische Spulen (3a-3n) angeordnet sind, die Unwuchten in Abhängigkeit der Trommel-Drehzahl kompensieren.

3. W-Maschinen nach Anspruch 1 **dadurch gekennzeichnet, dass** die Spulen (3a-3n) über eine Messeinrichtung (4), die die Unwucht aufgreift, eine elektromagnetische Kraft entgegen der Unwucht (ca. 180° versetzt) erzeugen.

4. W-Maschinen **dadurch gekennzeichnet, dass** die Trommel (2) so gestaltet ist (z.B. als Rotor wie in Wechselstrommotoren üblich), dass über die Spulen (3a-3n) eine Energie-Rückgewinnung erfolgt.

5. W-Maschinen **dadurch gekennzeichnet, dass** durch die Nutzung der elektromagnetischen Kraft der Spulen (3a-3n) eine Notbremsung erfolgen kann.

6. W-Maschinen **dadurch gekennzeichnet, dass** die Trommel (2) eine mechanische oder elektronische Notbremse enthält.

7. W-Maschinen **gekennzeichnet durch** eine Leichtbauweise, die keine schwere Sicherheitsbodenplatte und keine Transportsicherung enthält.

8. W-Maschinen **dadurch gekennzeichnet, dass** durch die hohe Schleuderdrehzahl nahezu trockene Wäsche erreicht wird.

9. W-Maschinen nach Anspruch 1 **dadurch gekennzeichnet, dass** der gesamte Antrieb für Schleudern und Waschen über einen Direktantrieb mit Rotor (12) und Ständerwicklung (11a-11n) erfolgt und damit der Antriebsmotor mit Antriebsrad (7) und Antriebsriemen entfällt.

10. W-Maschinen nach Anspruch 4 **dadurch gekennzeichnet, dass** (z.B. durch Vormagnetisieren der Spulen (3a-3n)) im Luftspalt (9) eine stabile Lagerung der Trommel (2) realisiert wird.

11. W-Maschinen nach Anspruch 9, **gekennzeichnet durch** Nutzung der Spulen (3a-3n) und der Ständerwickung (11a-11n) als Kombinationsspulen, bei denen eine Spule jeweils beide Funktionen übernimmt.
